# EUROPEAN PATENT SPECIFICATION

(11) **EP 3 141 842 B1**
(45) Date of publication and mention of the grant of the patent: **06.11.2019**
(21) Application number: 15184858.7
(22) Date of filing: 11.09.2015
(51) Int. Cl.: F24H 3/04, B60H 1/22, H05B 3/24

(54) **PTC HEATER FOR AN AIR CONDITIONING SYSTEM, IN PARTICULAR OF A MOTOR VEHICLE**
PTC-HEIZER FÜR EIN KLIMAANLAGENSYSTEM, INSBESONDERE EINES KRAFTFAHRZEUGS
CHAUFFAGE PTC POUR UN SYSTÈME DE CONDITIONNEMENT D'AIR, EN PARTICULIER D'UN VÉHICULE AUTOMOBILE

(43) Date of publication of application: 15.03.2017
(73) Proprietor: Mahle International GmbH, 70376 Stuttgart (DE)
(72) Inventor: GILLES, Magnier, 90110 Rougemont-le-Chateau (FR)
(74) Representative: BRP Renaud & Partner mbB Rechtsanwälte Patentanwälte Steuerberater

(56) References cited:
- EP-A1- 1 731 340
- EP-A1- 1 768 457
- EP-A1- 1 821 575
- EP-A1- 2 133 225

## Description

The invention relates to a PTC heater for an air conditioning system, in particular of a motor vehicle, and to an air conditioning system having at least one such PTC heater. The invention also relates to a motor vehicle having such an air conditioning system and to a method for manufacturing the PTC heater.

In modern motor vehicles, internal combustion engines are frequently used which have such high efficiency that the heat generated by means of the cooling water of the cooling system which interacts with the internal combustion engine is not sufficient to heat the passenger compartment of the vehicle to the desired degree. This applies particularly to very low external temperatures.

In order to alleviate such a deficit of heating power which can be made available, the prior art knows of what are referred to as PTC heaters whose core module is formed by what are referred to as electric PTC heating elements. Said PTC heating elements have the property that their electric resistance increases with an increasing temperature of the element ("Positive Temperature Coefficient"). Such PTC heating elements are typically arranged in a sandwich-like fashion between two carrier plates, together with which they form a heating device. A plurality of such heating devices are then stacked one on the other in a stacking direction in order to implement a PTC heater, wherein in each case a supporting structure is formed between the carrier plates of two heating devices which are adjacent in the stacking direction. Said supporting structure is often implemented in the form of a fin structure. Two heating devices which are adjacent in the stacking direction can be supported on the fins of a fin structure, with the result that a high level of mechanical strength of the arrangement composed of heating devices is ensured. At the same time, the air which is to be heated can flow through the fin structures. This permits effective transmission of the heating power generated by the PTC heating elements, via the carrier plates and the fin structures onto the air flowing through the PTC heater.

In the case of conventional PTC heaters, it often proves problematic to mount them in a stable fashion on one or more components of an air conditioning system. Conventional PTC heaters are typically attached to one or more such components by means of a clip connection or latching connection. Such a component may be, for example, an air-conducting duct of the air conditioning system.

The high fabrication costs which are associated with such structurally relatively complex clip connections or latching connections prove disadvantageous here. Furthermore, in the region of the clip connections or latching connections the tightness of the PTC heater, which is typically mounted in an air-conducting duct, can be reduced. This means that air flowing in an undesired fashion through the duct can escape into the external surroundings of the air conditioning system, or vice versa, non-air-conditioned air, which is even contaminated in certain circumstances, can pass into the components of the air conditioning system and is directed from there into the passenger compartment of the motor vehicle.

EP 2 145 783 B1 deals with a vehicle heating system having at least one heat exchanger through which an air stream can flow. At least one heating device is arranged on the heat exchanger. Said heating device has two contact plates between which a heating element is arranged. The heating element is secured by a positioning frame which can be attached to one of the contact plates by latching on, sliding on, or encapsulation by injection moulding.

Documents EP 1 768 457 A1, EP 1 821 575 A1, EP 2 133 225 A1 and EP 1 734 340 A1 disclose examples of conventional PTC-heaters. In particular, EP 1 821 575 A1 discloses all the features of the preamble of claim 1.

The present invention is concerned with the problem of providing, for a PTC heater of the type mentioned above, an improved embodiment which is distinguished, in particular, by reduced manufacturing costs.

This object is achieved by means of the subject matter of the independent patent claims. Preferred embodiments are the subject matter of the dependent patent claims.

The basic concept of the present invention is accordingly to integrally injection mould a supporting frame in the form of an injection moulded part made of plastic onto a PTC heater. This makes it possible to generate, in a simple and therefore cost-effective fashion, a supporting structure by means of which the PTC heater can be installed as a unit in an air conditioning system of a motor vehicle. In such an integrally injection moulded-on supporting frame the PTC heater can be secured in a permanent and mechanically stable fashion. It is therefore possible to dispense with complex clip connections or latching connections such as have been used hitherto for mounting PTC heaters. Furthermore, the leakage problem described above in the field of said clip connections or latching connections, at which the tightness of the PTC heater is typically reduced, is also eliminated.

A PTC heater according to the invention for an air conditioning system comprises a plurality of heating devices which are arranged in a stack-like fashion one on top of the other in a stacking direction. Each heating device comprises a plurality of electric PTC heating elements which are arranged in a sandwich-like fashion in the stacking direction between a first carrier and a second carrier. A fin structure is arranged between every two heating devices which are adjacent in the stacking direction, on which fin structure a first carrier of a heating device and a second carrier plate of a heating device which is adjacent in the stacking direction are supported. According to the invention, the PTC heater comprises a supporting frame which is made of a plastic, surrounds the plurality of heating devices and is embodied as a single-piece injection moulded part.

According to the invention, the supporting frame is integrally injection moulded onto the heating devices. This ensures permanently stable fixing of the supporting frame to the PTC heater.

In an advantageous development which is associated with particularly low manufacturing costs, the supporting frame has a first and second frame element which bound the plurality of heating devices in the stacking direction. The two frame elements lie opposite one another in the stacking direction.

In order to implement the PTC heater with a flat design, in one advantageous development of the invention it is proposed to embody the carriers of the heating devices as carrier plates which extend in a longitudinal direction running transversely with respect to the stacking direction.

In one advantageous development, the supporting frame has a third and a fourth frame element which bound the plurality of heating devices in the longitudinal direction. These two frame elements can be integrally injection moulded onto the carrier plates. In this variant, the third and fourth frame elements complete the first and second frame elements to form the supporting frame. The four frame elements are preferably manufactured in the course of the same injection moulding process, with the result that the four frame elements are integrally formed one on the other.

A PTC heater with a particularly high mechanical strength can be implemented in a further preferred embodiment in which the four frame elements surround the plurality of heating devices completely in a longitudinal section perpendicularly with respect to a transverse direction which runs perpendicularly both with respect to the stacking direction and with respect to the longitudinal direction. Said transverse direction runs perpendicularly here both with respect to the stacking direction of the heating devices and with respect to the longitudinal direction of the carrier plates.

In a further preferred embodiment, the first and second carrier plates of the heating device each have, in the longitudinal direction, a first attachment section and a second attachment section which lies opposite the first attachment section in the longitudinal direction. The first attachment section is received at least partially in the third frame element in order to attach the carrier plates to the supporting frame. The second attachment section is at least partially received in the fourth frame element in order to attach the carrier plates to the supporting frame. The two attachment sections can be received in the third and fourth frame element particularly expediently by integrally injection moulding the two frame elements onto the respective attachment sections. In other words, the third frame element is particularly preferably integrally injection moulded onto the first attachment sections, and the fourth frame element onto the second attachment sections.

In a further preferred embodiment, a first intermediate space, which extends in the longitudinal direction, is formed between a first end plate bounding the plurality of heating devices in the stacking direction and the first frame element. Alternatively or additionally, in this variant a second intermediate space, which extends in the longitudinal direction, is formed between a second end plate bounding the plurality of heating devices counter to the stacking direction and the second frame element.

For the purposes of a stable attachment of the supporting frame to one or more components of the air conditioning system, at least one flange section is formed on the supporting frame.

The at least one attachment section protrudes outwards from the supporting frame, away from the heating devices. In order to ensure permanently a highly stable attachment of the supporting frame to the air conditioning system, two or more flange sections can be provided.

The flange sections are preferably integrally formed on the supporting frame. This variant can be implemented particularly easily by also manufacturing the two flange sections in the course of the injection moulding process. In an alternative variant thereto, the attachment sections can be embodied as separate components which are attached to the supporting frame by means of a bonding connection or some other suitable connecting method.

In an advantageous development, a first flange section is formed on the first frame element and extends it counter to the longitudinal direction. Alternatively or additionally, a second flange section is formed on the second frame element and extends it counter to the longitudinal direction. Both implementations, either in themselves or in combination, facilitate the mounting of the supporting frame and therefore of the entire PTC heater.

The invention also relates to an air conditioning system for a motor vehicle having at least one PTC heater presented above according to one of the preceding claims.

The invention also relates to a motor vehicle having an air conditioning system presented above.

Finally, the invention relates to a method for manufacturing a PTC heater, in particular a PTC heater as explained above. In a first step a) of the method a plurality of heating devices which are arranged in a stack-like fashion one on top of the other in a stacking direction are arranged in an injection moulding device. Each heating device comprises a plurality of PTC heating elements which are arranged in a sandwich-like fashion in the stacking direction between a first and a second carrier plate. A fin structure is arranged between every two heating devices which are adjacent in the stacking direction. A first carrier of a specific heating device and a second carrier of a heating device which is adjacent to the specific heating device in the stacking direction are supported on the fin structure. In a second step b) of the method, the plurality of heating devices are encapsulated by injection moulding in order to form the PTC heater with a single-piece supporting frame made of a plastic.

Further important features and advantages of the invention can be found in the dependent claims, the drawing and the associated description of the figures with reference to the drawing.

Of course, the features which are mentioned above and which are to be explained below can be used not only in the respective combination indicated but also in other combinations or alone without departing from the scope of the present invention.

Preferred exemplary embodiments of the invention are illustrated in the drawing and are explained in more detail in the following description.

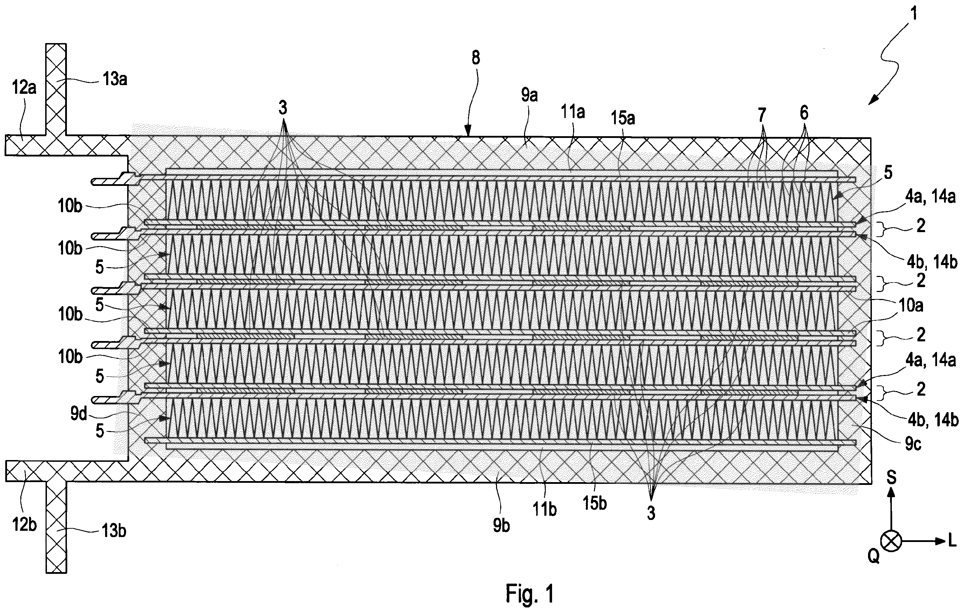

The single Figure 1 shows a schematic illustration of an example of a PTC heater 1 according to the invention for an air conditioning system of a motor vehicle. The PTC heater 1 comprises a plurality of heating devices 2 which are arranged in a stack-like fashion one on top of the other in a stacking direction S. The electric PTC heating elements 3 of each heating device 2 are arranged in a sandwich-like fashion in the stacking direction S between a first and a second carrier 14a, 14b. The carriers 14a, 14b are preferably embodied as first and second carrier plates 4a, 4b. The PTC heating elements 3 of each heating device 2 are preferably arranged adjacently and at a distance from one another in a longitudinal direction L of the carrier plates 4a, 4b which runs orthogonally with respect to the stacking direction S.

As is apparent from Figure 1, in each case a fin structure 5 is arranged between two heating devices 2 which are adjacent in the stacking direction S. A first carrier plate 4a of a specific heating device 2 and a second carrier plate 4b of a heating device 2 which is adjacent to this specific heating device 2 in the stacking direction S are supported on the fin structure 5. Each fin structure 5 has a plurality of fins 6, wherein air which is to be heated using the PTC heater 1 can flow through the intermediate spaces 7 formed between adjacent fins 6. For this purpose the air can flow in a transverse direction Q of the PTC heater 1 which runs perpendicularly with respect to the stacking direction S and with respect to the longitudinal direction L - in the example in Figure 1, the transverse direction Q runs perpendicularly with respect to the plane of the drawing through the fin structures 5. This ensures effective transmission of the heat generated by the PTC heating elements 3 via the carrier plates 4a, 4b of the heating devices 2 and the fin structures 5 assigned to the carrier plates 4a, 4b to the air flowing through the fin structures 5. The plurality of heating devices 2 is bounded in the stacking direction S by a first end plate 15a which can preferably be embodied identically to the first carrier plate 4a. In an analogous fashion, the heating devices 2 are bounded counter to the stacking direction S by a second end plate 15b which can preferably be embodied identically to the second carrier plates 4b. The first end plate 15a lies opposite the second end plate 15b. A first intermediate space 11a which extends in the longitudinal direction L is formed between the first end plate 15a and the first frame element 9a. A second intermediate space 11b which extends in the longitudinal direction L is formed between the second end plate 15b and the second frame element 9b.

As is shown figuratively in Figure 1, the PTC heater 1 has a supporting frame 8. The supporting frame is implemented as a single-piece injection moulded part made of a plastic and surrounds the heating devices 2. For this purpose, the supporting frame 8 comprises a first frame element 9a bounding the heating devices 2 in the stacking direction S, and a second frame element 9b bounding the heating devices 2 counter to the stacking direction S. The first and second frame elements 9a, 9b lie opposite one another in the stacking direction S. In addition to the first and second frame elements 9a, 9b, the supporting frame 8 has a third and a fourth frame element 9c, 9d which complete the first and second frame elements 9a, 9b to form the supporting frame 8. The third and fourth frame elements 9c, 9d bound the heating devices 2 in or counter to the longitudinal direction L.

As is also apparent from Figure 1, the first and second carrier plates 4a, 4b each have a first attachment section 10a which is received in the third frame element 9c. In an analogous fashion, the first and second carrier plates 4a, 4b each have a second attachment section 10b which lies opposite the first attachment section 10a in the longitudinal direction L and is received in the fourth frame element 9d. The third frame element 9c is preferably integrally injection moulded onto the first attachment sections 10a, and the fourth frame element 9d onto the second attachment sections 10b. The two attachment sections 10a, 10b form, according to Figure 1, end sections of the carrier plates 4a, 4b in the longitudinal direction L. In the longitudinal section (illustrated in Figure 1) of the PTC heater 1 perpendicularly with respect to the transverse direction Q, the four frame elements 9a-9d of the supporting frame 8 surround the plurality of heating devices 2 completely.

In order to manufacture the supporting frame 8, the plurality of heating devices 2 can be arranged with the fin structures 5 as a unit in a suitable injection mould of an injection moulding device (not shown in Figure 1). In the injection mould, the supporting frame 8 can then be integrally injection moulded onto the attachment sections 10a, 10b. In this way, a single-piece supporting frame 8 made of a plastic is manufactured, said plastic being integrally injection moulded onto the heating devices 2 of the PTC heater 1.

A first flange section 12a, which extends the first frame element 9a counter to the longitudinal direction L, is formed on the first frame element 9a of the supporting frame 8. A second flange section 12b, which also extends the second frame element 9b counter to the longitudinal direction L, is formed on the second frame element 9b. The two flange sections 12a, 12b project away from the heating devices 2 counter to the longitudinal direction L, and from the two frame elements 9a, 9b. An attachment element 13a, 13b for attaching the supporting frame 8 and therefore the entire PTC heater 1 to a component of an air conditioning system (not shown) can project, in each case laterally, in particular at a right angle, from the first or second flange section 12a, 12b, respectively.

## Claims

1. PTC heater (1) for an air conditioning system, in particular of a motor vehicle,
- having a plurality of heating devices (2) which are arranged in a stack-like fashion one on top of the other in a stacking direction (S),
- wherein each heating device (2) comprises a plurality of electric PTC heating elements (3) which are arranged in a sandwich-like fashion in the stacking direction (S) between a first carrier (4a) and a second carrier (4a, 4b), wherein a fin structure (5) is arranged between every two heating devices (2) which are adjacent in the stacking direction (S), on which fin structure (5) a first carrier (14a) of a heating device (2) and a second carrier (14b) of a heating device (2) which is adjacent in the stacking direction (S) are supported,
- having a supporting frame (8) which is made of a plastic, surrounds the plurality of heating devices (2) and is embodied as a single-piece injection moulded part,
**characterized in that**
the supporting frame (8) is integrally injection moulded onto the heating devices (2).

2. PTC heater according to Claim 1,
**characterized in that**
the supporting frame (8) has a first and second frame element (9a, 9b) which bound the plurality of heating devices (2) in the stacking direction (S) and lie opposite one another in the stacking direction (S).

3. PTC heater according to Claim 1 or 2,
**characterized in that**
the carriers (14a, 14b) of the heating devices (2) are embodied as carrier plates (4a, 4b) which extend in a longitudinal direction (L) running transversely with respect to the stacking direction (S).

4. PTC heater according to Claim 2 or 3,
**characterized in that**
the supporting frame (8) has a third and a fourth frame element (9c, 9d) which bound the plurality of heating devices (2) in the longitudinal direction (L) and complete the first and second frame elements (9a, 9b) to form the supporting frame (8).

5. PTC heater according to Claim 4,
**characterized in that**
the four frame elements (9a-9d) surround the plurality of heating devices (2) completely in a longitudinal section perpendicularly with respect to a transverse direction (Q) which runs perpendicularly both with respect to the stacking direction (S) and with respect to the longitudinal direction (L).

6. PTC heater according to Claim 4 or 5,
**characterized in that**
the first and second carrier plates (4a, 4b) each have, in the longitudinal direction (L), a first attachment section (10a) and a second attachment section (10b) which lies opposite the first attachment section (10a) and is received in the third or fourth frame element (9c, 9d).

7. PTC heater according to Claim 6,
**characterized in that**
the third frame element (9c) is integrally injection moulded onto the first attachment sections (10a), and the fourth frame element (9d) is integrally injection moulded onto the second attachment sections (10b).

8. PTC heater according to one of Claims 4 to 7,
**characterized in that**
- a first intermediate space (11a), which extends in the longitudinal direction (L), is formed between a first end plate (15a) bounding the plurality of heating devices (2) in the stacking direction (S) and the first frame element (9a), and/or **in that**
- a second intermediate space (11b), which extends in the longitudinal direction (L), is formed between a second end plate (15b) bounding the plurality of heating devices (2) counter to the stacking direction (S) and the second frame element (9b).

9. PTC heater according to one of the preceding claims,
**characterized in that**
at least one flange section (12a, 12b), preferably at least two flange sections (12a, 12b), for attaching the PTC heater (1) to an air conditioning system is/are formed, preferably integrally, on the supporting frame (8) and protrudes/protrude from the supporting frame (8), outwards away from the plurality of heating devices (2).

10. PTC heater according to Claim 9,
**characterized in that**
- a first flange section (12a) is formed on the first frame element (9a) and extends it counter to the longitudinal direction (L),
- a second flange section (12b) is formed on the second frame element (9b) and extends it counter to the longitudinal direction (L).

11. Air conditioning system for a motor vehicle having at least one PTC heater (1) according to one of the preceding claims.

12. Motor vehicle having an air conditioning system according to Claim 11.

13. Method for manufacturing a PTC heater (1), according to one of Claims 1 to 10, comprising the following steps:
a) arranging a plurality of heating devices (2) which are arranged in a stack-like fashion one on top of the other in a stacking direction (S) in an injection moulding device,
wherein each heating device (2) comprises a plurality of PTC heating elements (3) which are arranged in a sandwich-like fashion in the stacking direction (S) between a first and a second carrier plate (4a, 4b), and
wherein a fin structure (5) is arranged between every two heating devices (2) which are adjacent in the stacking direction (S), on which fin structure (5) a first carrier (14a) of a heating device (2) and a second carrier (14b) of a heating device (2) which is adjacent in the stacking direction (S) are supported,
b) encapsulating the plurality of heating devices (2) by injection moulding in order to form the PTC heater (1) with a single-piece supporting frame (8) made of a plastic.

## Patentansprüche

1. PTC-Heizer (1) für ein Klimaanlagensystem, insbesondere eines Kraftfahrzeugs,
- der eine Mehrzahl von Heizvorrichtungen (2) aufweist, die auf eine stapelartige Weise aufeinander in einer Stapelrichtung (S) angeordnet sind,
- wobei jede Heizvorrichtung (2) eine Mehrzahl von elektrischen PTC-Heizelementen (3) umfasst, die auf eine sandwichähnliche Weise in der Stapelrichtung (S) zwischen einem ersten Träger (4a) und einem zweiten Träger (4a, 4b) angeordnet sind, wobei eine Lamellenstruktur (5) zwischen jeweils zwei Heizvorrichtungen (2) angeordnet ist, die in der Stapelrichtung (S) angrenzen, auf welcher Lamellenstruktur (5) ein erster Träger (14a) einer Heizvorrichtung (2) und ein zweiter Träger (14b) einer Heizvorrichtung (2), die in der Stapelrichtung (S) angrenzt, gestützt sind,
- der einen Stützrahmen (8) aufweist, der aus Kunststoff hergestellt ist, die Mehrzahl von Heizvorrichtungen (2) umgibt und als ein ganzheitliches spritzgussgeformtes Teil ausgestaltet ist,
**dadurch gekennzeichnet, dass**
der Stützrahmen (8) ganzheitlich auf die Heizvorrichtungen (2) spritzgussgeformt ist.

2. PTC-Heizer nach Anspruch 1,
**dadurch gekennzeichnet, dass**
der Stützrahmen (8) ein erstes und zweites Rahmenelement (9a, 9b) hat, die die Mehrzahl von Heizvorrichtungen (2) in der Stapelrichtung (S) begrenzen und in der Stapelrichtung (S) einander gegenüber liegen.

3. PTC-Heizer nach Anspruch 1 oder 2,
**dadurch gekennzeichnet, dass**
die Träger (14a, 14b) der Heizvorrichtungen (2) als Trägerscheiben (4a, 4b) ausgestaltet sind, die sich in einer Längsrichtung (L) erstrecken, die quer in Bezug auf die Stapelrichtung (S) verläuft.

4. PTC-Heizer nach Anspruch 2 oder 3,
**dadurch gekennzeichnet, dass**
der Stützrahmen (8) ein drittes und ein viertes Rahmenelement (9c, 9d) hat, die die Mehrzahl von Heizvorrichtungen (2) in der Längsrichtung (L) begrenzen und die ersten und zweiten Rahmenelemente (9a, 9b) vervollständigen, um den Stützrahmen (8) zu bilden.

5. PTC-Heizer nach Anspruch 4,
**dadurch gekennzeichnet, dass**
die vier Rahmenelemente (9a-9d) die Mehrzahl von Heizvorrichtungen (2) in einem Längsabschnitt senkrecht in Bezug auf eine Querrichtung (Q) vollständig umgeben, die sowohl in Bezug auf die Stapelrichtung (S) als auch in Bezug auf die Längsrichtung (L) senkrecht verläuft.

6. PTC-Heizer nach Anspruch 4 oder 5,
**dadurch gekennzeichnet, dass**
die ersten und zweiten Trägerscheiben (4a, 4b) jeweils in der Längsrichtung (L) einen ersten Befestigungsabschnitt (10a) und einen zweiten Befestigungsabschnitt (10b), der gegenüber dem ersten Befestigungsabschnitt (10a) liegt und im dritten oder vierten Rahmenelement (9c, 9d) aufgenommen ist, aufweisen.

7. PTC-Heizer nach Anspruch 6,
**dadurch gekennzeichnet, dass**
das dritte Rahmenelement (9c) ganzheitlich auf die ersten Befestigungsabschnitte (10a) spritzgussgeformt ist und das vierte Rahmenelement (9d) ganzheitlich an die zweiten Befestigungsabschnitte (10b) spritzgussgeformt ist.

8. PTC-Heizer nach einem der Ansprüche 4 bis 7,
**dadurch gekennzeichnet, dass**
- ein erster Zwischenraum (11a), der sich in der Längsrichtung (L) erstreckt, zwischen einer ersten Endscheibe (15a), die die Mehrzahl von Heizvorrichtungen (2) in der Stapelrichtung (S) begrenzt, und dem ersten Rahmenelement (9a) gebildet ist, und/oder dadurch, dass
- ein zweiter Zwischenraum (11b), der sich in der Längsrichtung (L) erstreckt, zwischen einer zweiten Endscheibe (15b), die die Mehrzahl von Heizvorrichtungen (2) entgegen der Stapelrichtung (S) begrenzt, und dem zweiten Rahmenelement (9b) gebildet ist.

9. PTC-Heizer nach einem der vorstehenden Ansprüche,
**dadurch gekennzeichnet, dass**
mindestens ein Flanschabschnitt (12a, 12b), bevorzugt mindestens zwei Flanschabschnitte (12a, 12b), zum Befestigen des PTC-Heizers (1) an einem Klimaanlagensystem, bevorzugt ganzheitlich, auf dem Stützrahmen (8) gebildet ist/sind und vom Stützrahmen (8) nach außen, weg von der Mehrzahl von Heizvorrichtungen (2) hervorragt/hervorragen.

10. PTC-Heizer nach Anspruch 9,
**dadurch gekennzeichnet, dass**
- ein erster Flanschabschnitt (12a) an dem ersten Rahmenelement (9a) gebildet ist und sich der Längsrichtung (L) entgegengesetzt erstreckt,
- einen zweiten Flanschabschnitt (12b), der an dem zweiten Rahmenelement (9b) gebildet ist und sich der Längsrichtung (L) entgegengesetzt erstreckt.

11. Klimaanlagensystem für ein Kraftfahrzeug, das mindestens einen PTC-Heizer (1) nach einem der vorstehenden Ansprüche aufweist.

12. Kraftfahrzeug, das ein Klimaanlagensystem nach Anspruch 11 aufweist.

13. Verfahren zur Herstellung eines PTC-Heizers (1) nach einem der Ansprüche 1 bis 10, umfassend die folgenden Schritte:
a) Anordnen einer Mehrzahl von Heizvorrichtungen (2), die auf eine stapelähnliche Weise aufeinander in einer Stapelrichtung (S) angeordnet sind, in einer Spritzgussformenvorrichtung,
wobei jede Heizvorrichtung (2) eine Mehrzahl von PTC-Heizelementen (3) umfasst, die auf eine sandwichähnliche Weise in der Stapelrichtung (S) zwischen einer ersten und einer zweiten Trägerscheibe (4a, 4b) angeordnet sind, und
wobei eine Lamellenstruktur (5) zwischen jeweils zwei Heizvorrichtungen (2) angeordnet ist, die in der Stapelrichtung (S) angrenzen, auf welcher Lamellenstruktur (5) ein erster Träger (14a) einer Heizvorrichtung (2) und ein zweiter Träger (14b) einer Heizvorrichtung (2), die in der Stapelrichtung (S) angrenzt, gestützt sind,
b) Umschließen der Mehrzahl von Heizvorrichtungen (2) durch Spritzgussformen, um den PTC-Heizer (1) mit einem ganzheitlichen Stützrahmen (8) zu bilden, der aus einem Kunststoff besteht.

## Revendications

1. Chauffage PTC (1) pour un système de conditionnement d'air, en particulier d'un véhicule automobile
- ayant une pluralité de dispositifs de chauffage (2) qui sont aménagés en pile les uns sur les autres dans une direction d'empilement (S),
- dans lequel chaque dispositif de chauffage (2) comprend une pluralité d'éléments de chauffage PTC électriques (3) qui sont aménagés en sandwich dans la direction d'empilement (S) entre un premier support (4a) et un second support (4a, 4b), dans lequel une structure à ailettes (5) est aménagée entre tous les deux dispositifs de chauffage (2) qui sont adjacents dans la direction d'empilement (S), un premier support (14a) d'un dispositif de chauffage (2) et un second support (14b) d'un dispositif de chauffage (2) qui sont adjacents dans la direction d'empilement (S) étant supportés sur ladite structure à ailettes (5),
- ayant un cadre de support (8) qui est en plastique, entoure la pluralité de dispositifs de chauffage (2) et est incorporé dans une partie moulée par coulée par injection en une seule pièce,
**caractérisé en ce que**
le cadre de support (8) est moulé par coulée par injection en une seule pièce sur les dispositifs de chauffage (2).

2. Chauffage PTC selon la revendication 1,
**caractérisé en ce que**
- le cadre de support (8) a un premier et un deuxième élément de cadre (9a, 9b) qui relient la pluralité de dispositifs de chauffage (2) dans la direction d'empilement (S) et reposent à l'opposé l'un de l'autre dans la direction d'empilement (S).

3. Chauffage PTC selon la revendication 1 ou 2,
**caractérisé en ce que**
les supports (14a, 14b) des dispositifs de chauffage (2) sont incorporés sous forme de disques de supports (4a, 4b) qui s'étendent dans une direction longitudinale (L) s'étendant transversalement par rapport à la direction d'empilement (S).

4. Chauffage PTC selon la revendication 2 ou 3,
**caractérisé en ce que**
le cadre de support (8) a un troisième et un quatrième élément de cadre (9c, 9d) qui relient la pluralité de dispositifs de chauffage (2) dans la direction longitudinale (L) et complètent les premier et deuxième éléments de cadre (9a, 9b) pour former le cadre de support (8).

5. Chauffage PTC selon la revendication 4,
**caractérisé en ce que**
les quatre éléments de cadre (9a-9d) entourent complètement la pluralité de dispositifs de chauffage (2) dans un tronçon longitudinal perpendiculairement par rapport à une direction transversale (Q) qui s'étend perpendiculairement à la fois par rapport à la direction d'empilement (S) et par rapport à la direction longitudinale (L).

6. Chauffage PTC selon la revendication 4 ou 5,
**caractérisé en ce que**
les premier et second disques de support (4a, 4b) ont chacun, dans la direction longitudinale (L), un premier tronçon de fixation (10a) et un second tronçon de fixation (10b) qui repose à l'opposé du premier tronçon de fixation (10a) et est reçu dans le troisième ou le quatrième élément de cadre (9c, 9d).

7. Chauffage PTC selon la revendication 6,
**caractérisé en ce que**
le troisième élément de cadre (9c) est moulé par coulée par injection en une seule pièce sur les premiers tronçons de fixation (10a), et le quatrième élément de cadre (9d) est moulé par coulée par injection en une seule pièce sur les seconds tronçons de fixation (10b).

8. Chauffage PTC selon l'une quelconque des revendications 4 à 7,
**caractérisé en ce que**
- un premier espace intermédiaire (11a), qui s'étend dans la direction longitudinale (L), est formé entre un premier disque d'extrémité (15a) reliant la pluralité de dispositifs de chauffage (2) dans la direction d'empilement (S) et le premier élément de cadre (9a), et/ou **en ce que**
- un second espace intermédiaire (11b), qui s'étend dans la direction longitudinale (L), est formé entre un second disque d'extrémité (15b) reliant la pluralité de dispositifs de chauffage (2) dans la direction opposée à la direction d'empilement (S) et le deuxième élément de cadre (9b).

9. Chauffage PTC selon l'une quelconque des revendications précédentes,
**caractérisé en ce que**
au moins un tronçon de bride (12a, 12b), de préférence au moins deux tronçons de bride (12a, 12b), pour fixer le chauffage PTC (1) sur un système de conditionnement d'air est/sont formé(s), de préférence en une seule pièce, sur le cadre de support (8) et dépasse(nt) du cadre de support (8), vers l'extérieur en s'éloignant de la pluralité de dispositifs de chauffage (2).

10. Chauffage PTC selon la revendication 9
**caractérisé en ce que**
- un premier tronçon de bride (12a) est formé sur le premier élément de cadre (9a) et s'étend dans la direction opposée à la direction longitudinale (L),
- un second tronçon de bride (12b) est formé sur le second élément de cadre (9b) et s'étend dans la direction opposée à la direction longitudinale (L).

11. Système de conditionnement d'air pour un véhicule automobile ayant au moins un chauffage PTC (1) selon l'une quelconque des revendications précédentes.

12. Véhicule automobile ayant un système de conditionnement d'air selon la revendication 11.

13. Procédé de fabrication d'un chauffage PTC (1), selon l'une quelconque des revendications 1 à 10, comprenant les étapes suivantes :
a) aménagement d'une pluralité de dispositifs de chauffage (2) qui sont aménagés en pile les uns sur les autres dans une direction d'empilement (S) dans un dispositif de moulage par coulée par injection,
dans lequel chaque dispositif de chauffage (2) comprend une pluralité d'éléments de chauffage PTC (3) qui sont aménagés en sandwich dans la direction d'empilement (S) entre un premier et un second disque de support (4a, 4b), et
dans lequel une structure à ailettes (5) est aménagée entre tous les deux dispositifs de chauffage (2) qui sont adjacents dans la direction d'empilement (S), un premier support (14a) d'un dispositif de chauffage (2) et un second support (14b) d'un dispositif de chauffage (2) qui sont adjacents dans la direction d'empilement (S) étant supportés sur ladite structure à ailettes (5),
b) encapsulation de la pluralité de dispositifs de chauffage (2) par moulage par coulée par injection afin de former le chauffage PTC (1) avec un cadre de support (8) en une seule pièce en plastique.
